(19) **Europäisches Patentamt**
**European Patent Office**
**Office européen des brevets**

(11) **EP 4 084 575 B1**

(12) **EUROPEAN PATENT SPECIFICATION**

(45) Date of publication and mention
of the grant of the patent:
**02.08.2023 Bulletin 2023/31**

(21) Application number: **22171014.8**

(22) Date of filing: **29.04.2022**

(51) International Patent Classification (IPC):
*H05B 1/02* (2006.01)   *B60H 1/03* (2006.01)
*B60H 1/22* (2006.01)   *B60H 1/00* (2006.01)
*B60L 58/27* (2019.01)

(52) Cooperative Patent Classification (CPC):
**H05B 1/0236; B60H 1/00392; B60H 1/143;
B60H 1/2218; B60L 1/02; B60L 15/025;
B60L 58/27; H02P 29/62;** B60L 2240/34;
B60L 2240/425; B60L 2240/545; B60L 2250/12;
H05B 2203/023

(54) **HEATING APPARATUS AND CONTROL METHOD**

HEIZGERÄT UND STEUERUNGSVERFAHREN

APPAREIL DE CHAUFFAGE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.04.2021 CN 202110472935**

(43) Date of publication of application:
**02.11.2022 Bulletin 2022/44**

(73) Proprietor: **Huawei Digital Power Technologies
Co., Ltd.
Shenzhen, Guangdong 518043 (CN)**

(72) Inventors:
 • **XIE, Xiaowei
   Shenzhen, 518043, P.R.C. (CN)**

 • **SHI, Chaojie
   Shenzhen, 518043, P.R.C. (CN)**
 • **WU, Chaoqiang
   Shenzhen, 518043, P.R.C. (CN)**

(74) Representative: **Gill Jennings & Every LLP
The Broadgate Tower
20 Primrose Street
London EC2A 2ES (GB)**

(56) References cited:
 **WO-A1-2020/125684       WO-A1-2020/125769
 CN-A- 111 347 893        CN-A- 111 355 000
 US-A1- 2011 136 424**

Description

TECHNICAL FIELD

This application relates to the field of electric vehicle technologies, and in particular, to a heating apparatus and a control method.

BACKGROUND

The electric vehicle has two heating requirements at a low temperature. One heating requirement is that because performance of a power battery decreases at a low temperature, to ensure the performance of the power battery, the battery needs to be heated to keep a temperature of the battery at at least a specific value. The other heating requirement is that because a low temperature environment affects comfort of a driver and a passenger in a cabin, the cabin needs to be heated to provide a comfortable driving and riding environment.

Currently, for the two heating requirements, a solution of a mainstream in-vehicle heating system is connecting two PTC (Positive Temperature Coefficient) devices to a direct current bus bar of the electric vehicle in parallel, to convert electric energy into thermal energy by using the PTC devices, to heat the power battery and the cabin. Heating reaction of the PTC device is fast, and a power of each PTC device is about 5 kW, so that a relatively large heat emission power can be provided in time. In addition, the two PTC devices are usually disposed on separate control circuits, so that heat can be flexibly provided for the heating requirements of the cabin and the power battery.

However, this heating manner has significant disadvantages. First, costs of the PTC devices are very high (a single PTC device is about 500 CNY to 700 CNY). In addition, the two PTC devices are disposed in parallel, and therefore matching control circuits need to be disposed for the two PTC devices. This further increases costs of the in-vehicle heating system. In addition, to separately control heating of the cabin and the power battery, the two PTC devices are located in different coolant loops, and therefore it is usually difficult to reuse the two PTC devices. Consequently, circulation control of the PTC devices and a coolant is very single. This is not conducive to thermal energy optimization. In addition, an in-vehicle space of the electric vehicle is very valuable, and a vehicle weight directly affects endurance mileage of the electric vehicle. Therefore, how to reduce required components and parts while ensuring a heat emission power, to reduce an in-vehicle space that needs to be occupied and a vehicle weight has become a focus of electric vehicle research. Document WO 2020/125684 A1 discloses a heating apparatus according to the state of the art.

SUMMARY

This application provides a heating apparatus and a control method, to reduce manufacturing costs of the heating apparatus.

To achieve the foregoing objective, a first aspect of this application provides a heating apparatus, including: a motor control unit, having an inverter and a controller that are connected to each other; an electric heater; and a motor, having three-phase windings, where ends of the three-phase windings are connected to the inverter, the other ends of the three-phase windings are connected to a connection point, and the connection point is connected to the electric heater. Therefore, the other ends of the three-phase windings in the motor can be connected to the connection point to form three-phase windings of a Y connection, the electric heater is connected to the connection point, and the controller can control the inverter to control currents in the three-phase windings in the motor, to control the motor to rotate and emit heat, and can further control the currents in the three-phase windings to control a current flowing through the electric heater through the connection point, to control the electric heater to emit heat. Therefore, the electric heater can be controlled by using the motor control unit that controls the motor, without a need to independently dispose a control circuit for controlling the electric heater, so that a quantity of controllers, a weight of the heating apparatus, a required occupation space of the heating apparatus, and manufacturing costs of the heating apparatus can be reduced.

In a possible implementation of the first aspect, the heating apparatus further includes a switch disposed between the motor and the electric heater. Therefore, connection and disconnection between the electric heater and the connection point can be controlled by using the switch. When the electric heater does not need to emit heat, the connection may be broken by using the switch, to avoid a case in which the motor control unit cannot accurately control a current passing through the electric heater to be zero when controlling the currents in the three-phase windings, and consequently the electric heater generates unneeded heat, causing a waste of electric energy and impact on endurance. In addition, the connection may be broken by using the switch, so that the motor control unit does not need to control the electric heater anymore. Therefore, control accuracy of the motor can be prevented from being affected because the motor control unit controls the electric heater, thereby reducing control burden of the motor control unit.

In a possible implementation of the first aspect, the switch is configured to switch the electric heater and the motor to form a serial connection or parallel connection loop. Therefore, the electric heater can be controlled, by using the switch, to be connected to the connection point, so that the electric heater is connected to the motor in series. A current flowing through the electric heater can be controlled by using the motor control unit, to control a heat emission power of the electric heater. In addition, the electric heater can be controlled, by using the switch, to be connected to the motor in parallel, thereby reducing control burden of the motor control unit, and improving control flexibility of the electric heater.

In a possible implementation of the first aspect, the switch is connected to the controller, and the controller controls opening and closing of the switch. Therefore, the switch can be controlled by using the controller. In addition, a control circuit of the switch does not need to be independently disposed, so that a quantity of controllers, a weight of the heating apparatus, a required occupation space of the heating apparatus, and costs of the heating apparatus can be reduced.

A second aspect of this application provides a control method for a heating apparatus. The control method is applied to any possible implementation of the heating apparatus in the first aspect, and includes: in a first case, controlling currents in the three-phase windings, so that at least one of the motor and the electric heater emits heat, where the first case includes at least one of a case in which a temperature of a heated object is lower than a threshold and a case in which the controller receives a heating request signal. Therefore, the currents in the three-phase windings can be controlled to control the motor to rotate and emit heat, and the currents in the three-phase windings can be further controlled to control a current flowing through the electric heater through the connection point, to control the electric heater to emit heat. Therefore, the electric heater can be controlled by using the controller of the motor, without a need to independently dispose a control circuit for controlling the electric heater, so that a quantity of controllers, a weight of the heating apparatus, a required occupation space of the heating apparatus, and costs of the heating apparatus can be reduced.

In a possible implementation of the second aspect, the control method further includes: when the motor is in a rotating state, and a heat emission power of the motor cannot meet a heating requirement, controlling the electric heater to emit heat. Therefore, the heating apparatus can be controlled to use the electric heater for heating when the motor is in the rotating state, and the heat emission power of the motor cannot meet the heating requirement, so that heat generated by the motor during rotation can be preferentially used, thereby improving thermal energy utilization, reducing electric energy consumption, and prolonging endurance.

In a possible implementation of the second aspect, the control method further includes: when a heat emission power of the motor is greater than or equal to a heating power that needs to be provided, controlling the connection point to be disconnected from the electric heater. Therefore, when the heat emission power of the motor can meet the heating requirement, the electric heater is controlled to be disconnected from the connection point, so that the motor control unit does not need to control the electric heater anymore. Therefore, control accuracy of the motor can be prevented from being affected because the motor control unit controls the electric heater, thereby reducing control burden of the motor control unit.

In a possible implementation of the second aspect, the control method further includes: when the heat emission power of the motor is less than the heating power that needs to be provided, controlling the connection point to be connected to the electric heater. Therefore, when the electric heater needs to emit heat, the electric heater can be controlled to be connected to the connection point, so that the motor control unit can control the electric heater to emit heat at a proper heat emission power. Therefore, waste heat and a waste of electric energy can be prevented from being caused due to an excessively large heat emission power of the electric heater.

In a possible implementation of the second aspect, the control method further includes: when a required heating power of the electric heater is less than a rated heat emission power of the electric heater, controlling the electric heater to be connected to the connection point. Therefore, a heat emission power of the electric heater can be controlled by using the motor control unit, to prevent waste heat, a waste of electric energy, and impact on endurance mileage from being caused due to an excessively large heat emission power of the electric heater.

In a possible implementation of the second aspect, the control method further includes: when a required heating power of the electric heater is greater than or equal to the rated heat emission power of the electric heater, controlling the electric heater to form a parallel connection loop with the motor. Therefore, when the required heating power of the electric heater is greater than or equal to the rated heat emission power of the electric heater, the electric heater can emit heat only based on the rated emit heat power. Therefore, the electric heater is controlled to form the parallel connection loop with the motor, so that the electric heater emits heat at the rated power without a need to be controlled by the motor control unit, thereby reducing control burden of the motor control unit, and improving control flexibility of the electric heater.

A third aspect of this application provides a controller, configured to control a motor and an electric heater. The controller is connected to an inverter, the motor has three-phase windings, ends of the three-phase windings are connected to the inverter, the other ends of the three-phase windings are connected to a connection point, and the connection point is connected to the electric heater. In a first case, the controller controls currents in the three-phase windings, so that at least one of the motor and the electric heater emits heat, where the first case includes at least one of a case in which a temperature of a heated object is lower than a threshold and a case in which the controller receives a heating request signal. Therefore, the currents in the three-phase windings can be controlled by using the controller, to control the motor to rotate and emit heat, and the currents in the three-phase windings can be further controlled to control a current flowing through the electric heater through the connection point, to control the electric heater to emit heat. Therefore, a control circuit for controlling the electric heater does not need to be independently disposed, so that a quantity of controllers, a weight of the heating apparatus, a required occupation space of the heating apparatus, and costs of the heating apparatus can be reduced.

In a possible implementation of the third aspect, when the motor is in a rotating state, and a heat emission power of the motor is less than a heating power that needs to be provided, the controller controls the electric heater to emit heat. Therefore, when the motor is in the rotating state, and the heat emission power of the motor cannot meet a heating requirement, the controller can control the electric heater to perform heating, so that heat generated by the motor during rotation can be preferentially used, thereby improving thermal energy utilization, reducing electric energy consumption, and prolonging endurance.

In a possible implementation of the third aspect, the control method further includes: when a heat emission power of the motor is greater than or equal to the heating power that needs to be provided, the controller controls the connection point to be disconnected from the electric heater. Therefore, when the heat emission power of the motor can meet the heating requirement, the electric heater is controlled to be disconnected from the connection point, so that a motor control unit does not need to control the electric heater anymore. Therefore, control accuracy of the motor can be prevented from being affected because the motor control unit controls the electric heater, thereby reducing control burden of the motor control unit.

In a possible implementation of the third aspect, the control method further includes: when the heat emission power of the motor is less than the heating power that needs to be provided, the controller controls the connection point to be connected to the electric heater. Therefore, when the electric heater needs to emit heat, the electric heater can be controlled to be connected to the connection point, so that the motor control unit can control the electric heater to emit heat at a proper heat emission power. Therefore, waste heat and a waste of electric energy can be prevented from being caused due to an excessively large heat emission power of the electric heater.

In a possible implementation of the third aspect, the control method further includes: when a required heating power of the electric heater is less than a rated heat emission power of the electric heater, the controller controls the electric heater to be connected to the connection point. Therefore, a heat emission power of the electric heater can be controlled by using the motor control unit, to prevent waste heat, a waste of electric energy, and impact on endurance mileage from being caused due to an excessively large heat emission power of the electric heater.

In a possible implementation of the third aspect, the control method further includes: when a required heating power of the electric heater is greater than or equal to the rated heat emission power of the electric heater, the controller controls the electric heater to form a parallel connection loop with the motor. Therefore, when the required heating power of the electric heater is greater than or equal to the rated heat emission power of the electric heater, the electric heater can emit heat only based on the rated emit heat power. Therefore, the electric heater is controlled to form the parallel connection loop with the motor, so that the electric heater emits heat at the rated power without a need to be controlled by the motor control unit, thereby reducing control burden of the motor control unit, and improving control flexibility of the electric heater.

A fourth aspect of this application provides a vehicle, including any possible implementation of the heating apparatus in the first aspect. Therefore, the controller can control currents in the three-phase windings in the motor to control the motor to rotate and emit heat, and can further control the currents in the three-phase windings to control a current flowing through the electric heater through the connection point, to control the electric heater to emit heat. Therefore, the electric heater can be controlled by using the controller that controls the motor, without a need to independently dispose a control circuit for controlling the electric heater, so that a quantity of controllers, a weight of the heating apparatus, a required occupation space of the heating apparatus, and costs of the heating apparatus can be reduced.

A fifth aspect of this application provides a computing device, including at least one processor and at least one memory. The memory stores program instructions, and when the program instructions are executed by the at least one processor, the at least one processor is enabled to perform any possible implementation of the control method for a heating apparatus in the second aspect. Therefore, currents in the three-phase windings can be controlled to control the motor to rotate and emit heat, and the currents in the three-phase windings can be further controlled to control a current flowing through the electric heater through the connection point, to control the electric heater to emit heat. Therefore, the electric heater can be controlled by using the motor control unit that controls the motor, without a need to independently dispose a control circuit for controlling the electric heater, so that a quantity of controllers, a weight of the heating apparatus, a required occupation space of the heating apparatus, and costs of the heating apparatus can be reduced.

A sixth aspect of this application provides a computer-readable storage medium. The computer-readable storage medium stores program instructions, and when the program instructions are executed by a computer, the computer is enabled to perform any possible implementation of the control method for a heating apparatus in the second aspect. Therefore, currents in the three-phase windings can be controlled to control the motor to rotate and emit heat, and the currents in the three-phase windings can be further controlled to control a current flowing through the electric heater through the connection point, to control the electric heater to emit heat. Therefore, the electric heater can be controlled by using the motor control unit that controls the motor, without a need to independently dispose a control circuit for controlling the electric heater, so that a quantity of controllers, a weight of the heating apparatus, a required occupation space of the heating apparatus, and costs of the heating apparatus can be reduced.

A seventh aspect of this application provides a computer program. When the computer program is executed by a motor control unit, the motor control unit is enabled to perform any possible implementation of the control method for a heating apparatus in the second aspect. Therefore, currents in the three-phase windings can be controlled to control the motor to rotate and emit heat, and the currents in the three-phase windings can be further controlled to control a current flowing through the electric heater through the connection point, to control the electric heater to emit heat. Therefore, the electric heater can be controlled by using the motor control unit that controls the motor, without a need to independently dispose a control circuit for controlling the electric heater, so that a quantity of controllers, a weight of the heating apparatus, a required occupation space of the heating apparatus, and costs of the heating apparatus can be reduced.

It is clearer and easier to understand the foregoing and other aspects of this application in descriptions of the following (plurality of) embodiments.

## BRIEF DESCRIPTION OF DRAWINGS

The following further describes various features of this application and associations between the features with reference to the accompanying drawings. The accompanying drawings are examples, some features are not shown in actual scales, and features that are customary in the field to which this application relates and that are not necessary for this application may be omitted from some accompanying drawings, or features that are not necessary for this application may be additionally shown in some accompanying drawings. Combinations of features shown in the accompanying drawings are not intended to limit this application. In addition, in the full text of this specification, same reference signs refer to same content. Specific accompanying drawing descriptions are as follows:

FIG. 1 is a schematic diagram of an implementation environment of a heating apparatus according to an embodiment of this application;
FIG. 2 is a schematic diagram of an electrical architecture of a heating apparatus according to an embodiment of this application;
FIG. 3 is a schematic diagram of an electrical architecture in which the heating apparatus in FIG. 2 is installed in a vehicle;
FIG. 4 is a schematic diagram of a structure of a motor control unit in FIG. 3;
FIG. 5 is a three-phase inverter circuit of the heating apparatus in FIG. 3;
FIG. 6 is a flowchart of a control method according to an embodiment of this application;
FIG. 7 is a schematic diagram of an electrical architecture of another heating apparatus according to an embodiment of this application;
FIG. 8 is an three-phase inverter circuit of the heating apparatus in FIG. 7;
FIG. 9 is a flowchart of another control method according to an embodiment of this application;
FIG. 10 is a schematic diagram of an electrical architecture of a third heating apparatus according to an embodiment of this application;
FIG. 11 is an three-phase inverter circuit of the heating apparatus in FIG. 10;
FIG. 12 is a flowchart of a third control method according to an embodiment of this application;
FIG. 13 is a schematic diagram of a cooling loop connection structure according to an embodiment of this application;
FIG. 14 is a schematic diagram of another cooling loop connection structure according to an embodiment of this application; and
FIG. 15 is a schematic diagram of a structure of a computing device according to an embodiment of this application.

DESCRIPTION OF DRAWING MARKS
100: MCU; 110: controller; 120: inverter; 121: first connection end; 122: second connection end; 123: first bridge arm; 124: second bridge arm; 125: third bridge arm; 126: capacitor; 127: switch module; 200: motor; 210: three-phase winding; 211: star point; 220: third connection end; 230: fourth connection end; 300: electric heater; 310: fifth connection end; 320: sixth connection end; 400: battery; 500: OBC; 600: direct current charging connector; 700: DC/DC; 800: bus bar; 900: cabin; 1000: three-way connector; 1100: three-way valve; 1200: oil pump; 1300: heat exchanger; 1500: computing device; 1510: processor; 1520: memory; 1530: communications interface; 1540: bus; K1: switch; K11: seventh connection end; K12: eighth connection end; K13: ninth connection end; L1: first circulation loop; L2: second circulation loop; L3: third circulation loop; L4: fourth circulation loop; L5: fifth circulation loop; and L6: sixth circulation loop.

## DESCRIPTION OF EMBODIMENTS

The words such as "first", "second", and "third" and similar terms such as "module A", "module B", and "module C" in the specification and claims are only used to distinguish between similar objects, and do not represent a specific arrangement order of the objects. It may be understood that, if permitted, the objects may be interchanged in terms of a specific order or sequence, so that the embodiments of this application described herein can be implemented in an order other than an order illustrated or described herein.

In the following descriptions, reference signs representing steps, such as S110 and S120, do not indicate that the steps are necessarily performed based on the reference signs. If permitted, preceding and following steps may be interchanged in terms of order, or may be simultaneously performed.

The term "include" used in the specification and claims shall not be construed as being limited to content listed thereafter. This does not exclude other elements or steps. Therefore, this should be interpreted as specifying existence of a mentioned feature, whole, step, or component, but not excluding existence or addition of one or more other features, wholes, steps, or components, or groups thereof. Therefore, an expression "device including apparatuses A and B" should not be limited to a device including only the components A and B.

"An embodiment" mentioned in this specification means that a specific feature, structure, or characteristic described with reference to the embodiment is included in at least one embodiment of this application. Therefore, a term "in an embodiment" appearing throughout this specification does not necessarily indicate a same embodiment, but can indicate a same embodiment. , ,

First, to better understand the technical solutions in the embodiments of this application, definitions of terms in this application are described.

PTC device: The PTC device is a heating resistor device whose resistance value has a positive temperature coefficient. When a temperature of the PTC device exceeds a specific temperature, the resistance value of the PTC device stepwise increases as the temperature increases.

Direct axis: The direct axis is also referred to as a d-axis.

Quadrature axis: The quadrature axis is also referred to as q-axis, and is obtained through simplified translation from a quadrature axis or a q-axis.

Zero axis: The zero axis a common-mode component loop of a three-phase system.

A component of the d-, q-, and zero axes may be obtained through Park transformation by using the three-phase system, and is specifically expressed as follows:

$$\begin{bmatrix} I_d \\ I_q \\ I_0 \end{bmatrix} = \frac{2}{3} \begin{bmatrix} \cos(\theta) & \cos(\theta - 2\pi/3) & \cos(\theta + 2\pi/3) \\ -\sin(\theta) & -\sin(\theta - 2\pi/3) & -\sin(\theta + 2\pi/3) \\ 1/2 & 1/2 & 1/2 \end{bmatrix} \begin{bmatrix} I_a \\ I_b \\ I_c \end{bmatrix}$$

Park transformation (Park Transformation): The Park transformation is a motor analysis method in which stationary three-phase coordinates are projected onto a direct axis (d-axis) and a quadrature axis (q-axis) in a dq-axis coordinate system that rotates around a rotor and a zero axis (0-axis) perpendicular to a dq-plane, thereby implementing diagonalization of a stator inductance matrix, so that a motion analysis of a synchronous motor is simplified.

Copper loss: The copper loss is heat generated when an alternating current/a direct current passes through a copper conductor. A heat emission power is calculated by using $I^2R$, where I is a passing current (an effective value of a direct current or an alternating current amount), and R is a resistance of the conductor.

Iron loss: The iron loss is a loss generated by a ferromagnetic material (such as steel or a silicon steel sheet) in an alternating magnetic field, including a hysteresis loss, an eddy current loss, a supplementary loss, and the like.

Permanent magnet loss: A permanent magnet material has conductivity, and generates an eddy current in alternating magnetic field through induction, and therefore a corresponding eddy current loss is generated. A value of the eddy current loss is also calculated by using $I^2R$, where I is the eddy current generated through induction, and R is a resistance of an eddy current loop.

Comprehensive current vector: In a dq-axis coordinate system or three-phase coordinate system of a current, a sum vector including current vectors on all axes is the comprehensive current vector.

Pulsed magnetic field: The pulsed magnetic field is a magnetic field that does not change in direction and changes only in amplitude.

Star point: The star point is a neutral point of a three-phase Y connection system, namely, a middle point of a three-phase wire Y connection.

Unless otherwise defined, all technical and scientific terms used in this specification have a same meaning as that usually understood by a person skilled in the art of this application. If there is any inconsistency, meanings stated in this specification or meanings obtained from content recorded in this specification are used. In addition, terms used in this specification are merely for the purpose of describing embodiments of this application, but are not intended to limit this application.

Embodiments of this application provide a heating apparatus, to reduce components and parts of the heat apparatus, thereby reducing a volume and a weight of the heat emission apparatus, and reducing costs of the heat emission apparatus.

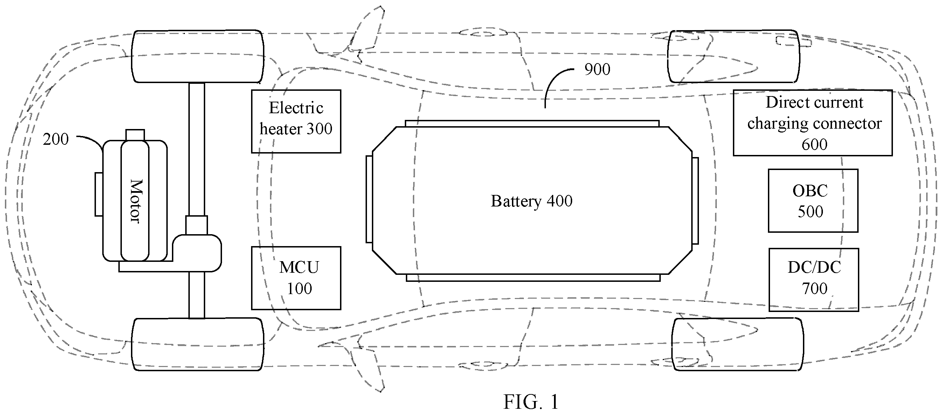

FIG. 1 is a schematic diagram of an implementation environment of a heating apparatus according to an embodiment of this application. As shown in FIG. 1, the heating apparatus in this application may be disposed inside a vehicle, to provide heat for the vehicle. The vehicle in FIG. 1 and a vehicle in this specification are both described by using an electric vehicle as an example. This should not be considered as a limitation on the embodiments of this application. The vehicle may be any one of different types of vehicles such as a car, a truck, a passenger bus, and an SUV (sport utility vehicle), or the vehicle may be a land transportation apparatus that carries people or goods, such as a tricycle, a two-wheeled vehicle, or a train. Alternatively, the heating apparatus in this application is not limited to being disposed inside a vehicle, and may be alternatively applied to other types of transportation such as an aircraft and a ship. Even the heating apparatus in this embodiment of this application is not limited to being disposed in transportation, and may be alternatively disposed in any other device that has a heating requirement.

To describe technical solutions of the heating apparatus in this application more clearly, the following describes in detail possible specific implementations of the heating apparatus in this application with reference to specific embodiments.

**Embodiment 1**

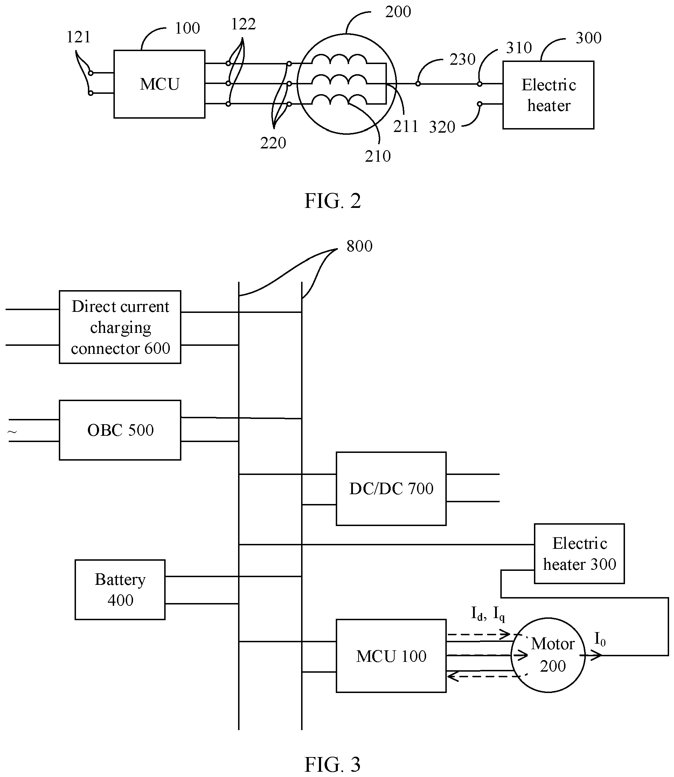

FIG. 2 is a schematic diagram of an electrical architecture of a heating apparatus according to an embodiment of this application. As shown in FIG. 2, the heating apparatus in this application includes an MCU (Motor Control Unit) 100, an electric heater 300, and a motor 200. The motor 200 has three-phase windings 210, ends of the three-phase windings 210 are connected to the MCU 100, and the other ends of the three-phase windings 210 are connected to the electric heater 300 after being connected to each other at a connection point (star point 211). Therefore, currents in the three-phase windings 210 can be controlled by using the MCU 100 of the motor 200, to control the motor 200 to rotate and emit heat, and a current flowing through the electric heater 300 through the star point 211 can be further controlled to control the electric heater 300 to emit heat. Therefore, a control circuit for controlling the electric heater 300 does not need to be additionally disposed, so that components and parts that need to be used by the heat emission apparatus can be reduced, thereby reducing a volume and a weight of the heating apparatus and manufacturing costs of the heating apparatus.

FIG. 3 is a schematic diagram of an electrical architecture in which the heating apparatus in FIG. 2 is installed in a vehicle. As shown in FIG. 3, the heating apparatus in this embodiment of this application is installed in the vehicle, and may further include a bus bar 800, a battery 400 connected to the bus bar 800, a direct current charging connector 600, an OBC (On board charger) 500, and DC/DC converter (DC/DC for short) 700. The battery 400 is configured to provide electric energy. The bus bar 800 is configured to transport the electric energy of the battery 400 to various positions of the vehicle. The direct current charging connector 600 is configured to be connected to an external direct current power supply, and therefore can charge the battery 400 or provide a direct current for an electrical device connected to the bus 800. The OBC 500 is configured to be connected to an external alternating current power supply, and can convert an alternating current into a direct current, and therefore can charge the battery 400 or provide a direct current for the electrical device connected to the bus 800. The DC/DC 700 can convert a direct current provided by the battery 400 from a voltage value into another voltage value, so that the electrical device can obtain electric energy of a voltage value required for working. The MCU 100 is connected to the bus 800 to obtain electric energy of the battery 400. After being connected to the motor 200 in series, the electric heater 300 is connected to the bus bar 800 to form a loop, to convert the electric energy into thermal energy.

The battery 400 has a positive connection end and a negative connection end, and can provide a direct current. The battery 400 may be a single battery module, or may be a battery module formed by combining a plurality of battery units. This is not limited herein. The battery 400 may be applied to a vehicle, and may be a drive battery that provides electric energy for driving the motor 200, or may be an auxiliary battery that provides electric energy for another specific system or device in the vehicle. The bus bar 800 has a positive wire and a negative wire, and the positive wire and the negative wire are respectively connected to the positive connection end and the negative connection end of the battery 400, to transmit electric energy of the battery 400 to various parts of the vehicle. The electric heater 300 has a fifth connection end 310 and a sixth connection end 320 (FIG. 2), and can convert electric energy into thermal energy after being powered on. The electric heater 300 may be a PTC device or another device that can convert electric energy into thermal energy.

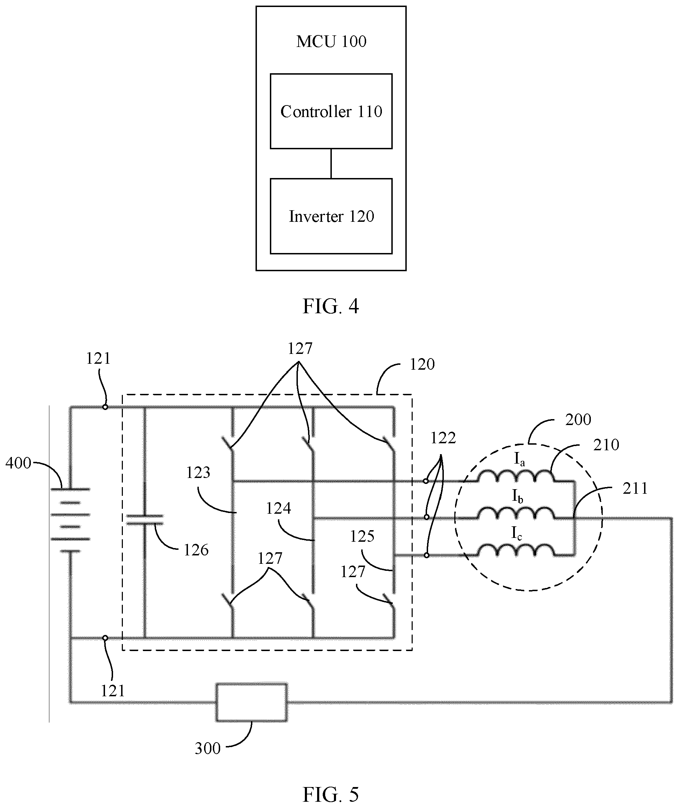

FIG. 4 is a schematic diagram of a structure of the MCU 100 in FIG. 3. FIG. 5 is a three-phase inverter circuit of the heating apparatus in FIG. 3. As shown in FIG. 2, FIG. 3, and FIG. 4, the MCU 100 may include a controller 110 and an inverter 120, and the controller 110 may send a control signal to control the inverter 120. As shown in FIG. 5, the inverter 120 includes a capacitor 126, a first bridge arm 123, a second bridge arm 124, and a third bridge arm 125 that are connected in parallel. After the parallel connection, two first connection ends 121 are formed through extension from parallel connection positions at two ends, and the two first connection ends 121 are respectively connected to the bus bar 800, to be connected to a positive electrode and a negative electrode of the battery 400. A pigtail terminal is disposed on each of the first bridge arm 123, the second bridge arm 124, and the third bridge arm 125 (that is, a line is disposed, where one end of the line is connected to a pigtail end at a middle position of the first bridge arm 123, the second bridge arm 124, or the third bridge arm 125, and a connection terminal is disposed on the other end of the line), three pigtail terminals form three second connection ends 122, and the three second connection ends 122 are configured to be connected to the motor 200. One switch module 127 is disposed on each of two sides of the pigtail terminal of each of the first bridge arm 123, the second bridge arm 124, and the third bridge arm 125. The controller 110 may control the switch modules 127 in the inverter 120 to be periodically disconnected and connected. Therefore, currents passing through the three second connection ends 122 can be separately controlled.

The motor 200 may be a permanent-magnet synchronous motor, an asynchronous motor, a reluctance motor, an electric excitation motor, or the like. A three-phase asynchronous motor is used as an example. The motor 200 may include a stator kept stationary and a rotatable rotor, and the three-phase windings 210 are disposed on the stator. The three-phase windings 210 each have a head end and a tail end, one pigtail terminal is disposed at each of three head ends of the three-phase windings 210 to form three third connection ends 220, and three tail ends of the three-phase windings 210 are connected to each other at the connection point (star point 211), so that the windings form a Y connection structure. A pigtail terminal is disposed at the star point 211 of the Y connection structure of the three-phase windings 210 to form a fourth connection end 230. The three third connection ends 220 are configured to be connected to the three second connection ends 122 of the inverter 120. The fourth connection end 230 is configured to be connected to the fifth connection end 310 of the electric heater 300, and the sixth connection end 320 of the electric heater 300 is connected to the bus bar 800, so that the electric heater 300 forms a loop.

Currents $I_a$, $I_b$, and $I_c$ are respectively generated in the three-phase windings 210 after the motor 200 is powered on, and the currents $I_a$, $I_b$, and $I_c$ can be controlled by using the MCU 100. For ease of understanding, the currents $I_a$, $I_b$, and $I_c$ in the three-phase windings 210 are projected onto a direct axis (d-axis), a quadrature axis (q-axis), and a zero axis (0-axis) through Park transformation, to be converted into a direct axis current $I_d$, a quadrature axis current $I_q$, and a zero axis current $I_0$. Therefore, the controller 110 in the MCU 100 can control the switch modules 127 in the inverter 120 to be periodically disconnected and connected, to control the currents $I_a$, $I_b$, and $I_c$ in the three-phase windings 210, so that the direct axis current $I_d$, the quadrature axis current $I_q$, and the zero axis current $I_0$ that are injected into the motor 200 can be controlled. In addition, the zero axis is a common-mode component (the currents $I_a$, $I_b$, and $I_c$ are equal in value and has a same phase) loop of a three-phase system. When the star point 211 is connected to the loop through the electric heater 300, the zero axis current $I_0$ can pass through the electric heater 300 through the star point 211, so that the electric heater 300 can emit heat.

In the motor 200, the direct axis current $I_d$ and the quadrature axis current $I_q$ may be controlled, by using the MCU 100, to pass through the three-phase windings 210 of the motor 200 to form a loop, and the zero axis current $I_0$ may be further controlled to flow through the electric heater 300 through the star point 211 to form a loop. The direct axis current $I_d$ is mainly used to adjust a rotating magnetic field, the quadrature axis current $I_q$ is mainly used to adjust a torque (rotating torque), and the zero axis current $I_0$ is used to control the electric heater 300 to emit heat.

Specifically, the MCU 100 controls the direct axis current $I_d$ not to be zero, the quadrature axis current

$I_q$ not to be zero, and the zero axis current $I_0$ to be zero. In this case, the direct axis current $I_d$ can generate a rotating magnetic field in the three-phase windings 210, and heat is emitted by using heat generated due to a copper loss, an iron loss, and a permanent magnet loss. The quadrature axis current $I_q$ can enable the rotor of the motor 200 to generate torque, so that the motor 200 rotates. The zero axis current $I_0$ is zero, so that no current flows through the electric heater 300. Therefore, the electric heater 300 does not emit heat. That is, the MCU 100 controls the motor 200 to rotate, and controls the motor 200 to independently emit heat.

The MCU 100 controls the direct axis current $I_d$ not to be zero, the quadrature axis current $I_q$ not to be zero, and the zero axis current $I_0$ not to be zero. In this case, the direct axis current $I_d$ can generate a rotating magnetic field in the three-phase windings 210, and heat is emitted by using heat generated due to a copper loss, an iron loss, and a permanent magnet loss. The quadrature axis current $I_q$ can enable the rotor of the motor 200 to generate torque, so that the motor 200 rotates. The zero axis current $I_0$ flows through the electric heater 300. Therefore, the electric heater 300 emits heat. That is, the MCU 100 controls the motor 200 to rotate, and controls both the motor 200 and the electric heater 300 to emit heat.

The MCU 100 controls the direct axis current $I_d$ not to be zero, the quadrature axis current $I_q$ to be zero, and the zero axis current $I_0$ to be zero. In this case, the direct axis current $I_d$ can generate a rotating magnetic field in the three-phase windings 210, and heat is emitted by using heat generated due to a copper loss, an iron loss, and a permanent magnet loss. The quadrature axis current $I_q$ is zero, so that torque of the rotor of the motor 200 is zero. Therefore, the motor 200 does not rotate or jitter. The zero axis current $I_0$ is zero, so that no current flows through the electric heater 300. Therefore, the electric heater 300 does not emit heat. That is, the MCU 100 controls the motor 200 to be stationary, and controls the motor 200 to independently emit heat.

The MCU 100 controls the direct axis current $I_d$ to be zero, the quadrature axis current $I_q$ to be zero, and the zero axis current $I_0$ not to be zero. In this case, the direct axis current $I_d$ is zero. Therefore, no rotating magnetic field is generated in the three-phase windings 210, and none of a copper loss, an iron loss, and a permanent magnet loss is generated, that is, the motor does not emit heat. The quadrature axis current $I_q$ is zero, so that torque of the rotor of the motor 200 is zero. Therefore, the motor 200 does not rotate or jitter. The zero axis current $I_0$ flows through the electric heater 300. Therefore, the electric heater 300 emits heat. That is, the MCU 100 controls the motor 200 to be stationary, and controls the electric heater 300 to independently emit heat.

The MCU 100 controls the direct axis current $I_d$ not to be zero, the quadrature axis current $I_q$ to be zero, and the zero axis current $I_0$ not to be zero. In this case, the direct axis current $I_d$ can generate a rotating magnetic field in the three-phase windings 210, and heat is emitted by using heat generated due to a copper loss, an iron loss, and a permanent magnet loss. The quadrature axis current $I_q$ is zero, so that torque of the rotor of the motor 200 is zero. Therefore, the motor 200 does not rotate or jitter. The zero axis current $I_0$ flows through the electric heater 300. Therefore, the electric heater 300 emits heat. That is, the MCU 100 controls the motor 200 to be stationary, and controls both the motor 200 and the electric heater 300 to emit heat.

Further, the MCU 100 can control a value of the zero axis current $I_0$ to control a heat emission power of the electric heater 300. Therefore, the heat emission power of the electric heater 300 can be adjusted based on a heating power that needs to be provided for the vehicle, so that waste heat can be prevented from being caused due to excessive generated heat, thereby improving energy utilization.

Therefore, the MCU 100 controls the motor 200 and the electric heater 300 through decoupling (there is no mutual coupling interference). That is, the motor 200 and the electric heater 300 can be separately controlled by using the MCU 100, without a need to independently dispose a control circuit for the electric heater 300, thereby reducing a weight and a volume of the heating apparatus, and reducing costs.

Further, the MCU 100 also generates heat when controlling the motor 200 and the electric heater 300 to work. Therefore, the heat generated by the MCU 100 may be used to heat the battery 400 and/or a cabin 900, thereby improving a heat emission power of the heat emission apparatus.

It should be noted that "point" and "end" mentioned in the foregoing star point, neutral point, middle point, connection point, and connection end are "point" and "end" in a sense of circuit analysis, and are not necessarily "point" and "end" that actually exist in a sense of a mechanical structure.

Based on the heating apparatus in this embodiment of this application, this application further provides a control method, to separately control a motor 200 and an electric heater 300 by using one MCU 100, so that a quantity of control circuits, a volume and a weight of the heating apparatus, and costs can be reduced.

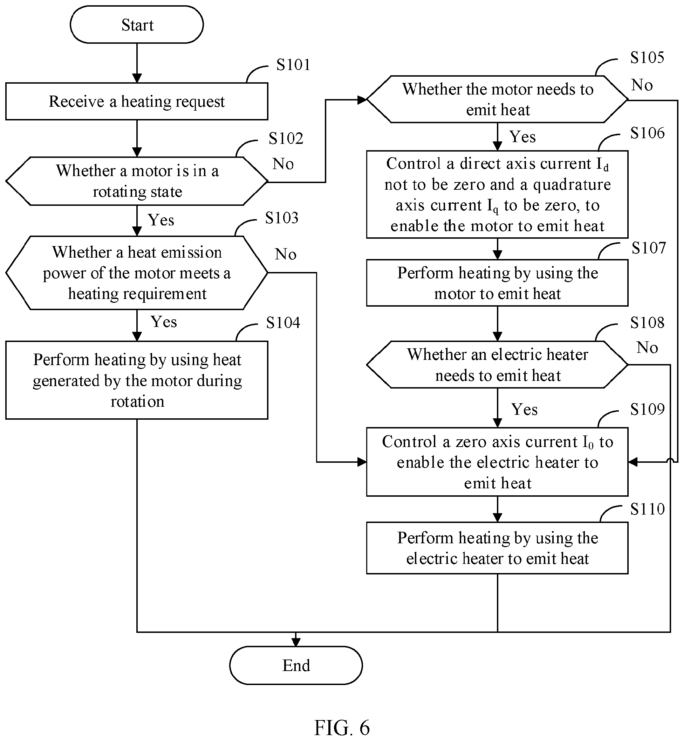

FIG. 6 is a flowchart of a control method according to an embodiment of this application. As shown in FIG. 6, a specific procedure of the control method in this embodiment of this application includes the following steps.

S101. When a vehicle starts in a low-temperature environment, a temperature of a battery 400 is lower than a specified threshold, and the battery 400 needs to be heated, when a driver chooses, by using a control apparatus or a mobile terminal in a cabin, to increase a temperature in the cabin 900, or when a heating request signal is sent, enter step S102.

S102. A controller 110 determines whether a motor 200 is in a rotating state. When the motor 200 is in the rotating state, step S103 is entered. The motor 200 generates heat during rotation due to a copper loss, an iron loss, and a permanent magnet loss, and the heat generated by the motor 200 during rotation may be preferentially used to heat the battery 400 and/or the cabin 900. When the motor 200 is in a stationary state, step S 105 is entered.

S103. Determine whether a heat emission power of the motor 200 during rotation meets a heating requirement. When the heat emission power of the motor 200 during rotation is greater than or equal to a heating power that needs to be provided, for example, if the motor 200 generates a relatively large amount of heat when the motor 200 performs high-power working, for example, drives the electric vehicle to travel at a high speed, and the heat generated by the motor 200 is enough, the electric heater 300 does not need to emit heat in this case, and step S104 is entered. When the heat emission power of the motor 200 is less than the heating power that needs to be provided, for example, when the motor 200 generates a relatively small amount of heat due to a relatively low rotation speed, step S109 is entered.

S104. Heat the battery 400 and/or the cabin 900 by using the heat generated by the motor 200 during rotation due to the copper loss, the iron loss, and the permanent magnet loss, and end the procedure. Therefore, the heat generated by the motor 200 through rotation can be recycled and utilized, thereby improving energy usage efficiency, reducing electric energy consumption, and improving endurance mileage.

S105. When the motor 200 is in the stationary state, determine whether the motor 200 needs to be used for heat emission. When the motor 200 needs to perform heating, for example, when a required heating power is greater than a rated heat emission power of the electric heater 300 and therefore the motor 200 needs to emit heat to improve a heat emission power, step S106 is entered to use the motor 200 for heat emission. When the motor 200 does not need to be used for heat emission, for example, when efficiency at which the motor 200 is used for heat emission to heat the battery or the cabin 900 is lower than efficiency at which the electric heater 300 is used for heat emission to heat the battery or the cabin 900 and therefore the motor 200 is not used for heat emission, step S109 is entered.

S106. The controller 110 controls switch modules 127 in an inverter 120 to be periodically disconnected and connected. Therefore, currents $I_a$, $I_b$, and $I_c$ in three-phase windings 210 can be controlled, and then a value of a direct axis current $I_d$ can be controlled, to generate an alternating magnetic field by using the direct axis current $I_d$, and generate heat by using a copper loss, an iron loss, and a permanent magnet loss that are generated by the alternating magnetic field. A quadrature axis current $I_q$ is controlled to be zero, so that torque is zero. Therefore, the motor 200 can be kept stationary to avoid jittering.

S107. Heat the battery 400 and/or the cabin 900 by using heat emitted by the motor 200.

S108. Determine whether the electric heater 300 needs to emit heat. When the electric heater 300 needs to emit heat, for example, when a heat emission power of the motor 200 is less than a heating power that needs to be provided and therefore the electric heater 300 needs to emit heat to meet a heating requirement, or when efficiency at which the electric heater 300 is used for heat emission to heat the battery or the cabin 900 is higher than efficiency at which the motor 200 is used for heat emission to heat the battery or the cabin 900 and therefore the electric heater 300 needs to emit heat, step S109 is entered. When the electric heater 300 does not need to emit heat, for example, when a heat emission power of the motor 200 is greater than or equal to the heating power that needs to be provided, and efficiency at which the electric heater 300 is used for heat emission to heat the battery or the cabin 900 is lower than or equal to efficiency at which the motor 200 is used for heat emission to heat the battery or the cabin 900 and therefore the electric heater 300 does not need to emit heat, the procedure is ended.

S109. The controller 110 controls the switch modules 127 in the inverter 120 to be periodically disconnected and connected. Therefore, the currents $I_a$, $I_b$, and $I_c$ in the three-phase windings 210 can be controlled, and then a zero axis current $I_0$ can be controlled to flow through a loop formed by the star point 211 and the electric heater 300, so that the electric heater 300 emits heat.

S110. Heat the battery 400 and/or the cabin 900 by using the heat emitted by the electric heater 300, and end the procedure.

Because the MCU 100 controls the motor 200 and the electric heater 300 through decoupling, the motor 200 and the electric heater 300 can be flexibly controlled, based on a heating requirement by using one MCU 100, to generate heat, so that a quantity of control circuits, a volume and a weight of a heating apparatus, and costs can be reduced.

Further, in the control method in the foregoing embodiment, first, it is determined, in step S105, whether the motor 200 needs to emit heat, and then it is determined, in subsequent step S108, whether the electric heater 300 needs to emit heat. It should be noted that there is no fixed order relationship between step S105 and step S108. In some possible embodiments, it may be first determined, in step S108, whether the electric heater 300 needs to emit heat, and then it is determined, in step S105, whether the motor 200 needs to emit heat; or step S108 of determining whether the electric heater 300 needs to emit heat and step S105 of determining whether the motor 200 needs to emit heat are simultaneously performed.

**Embodiment 2**

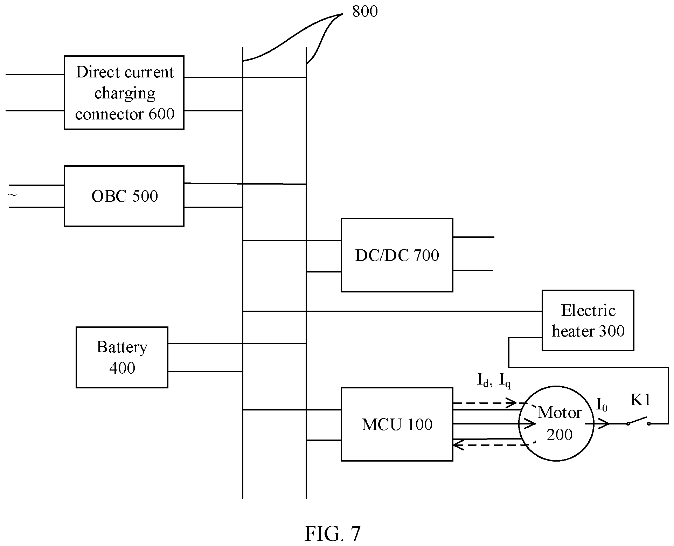

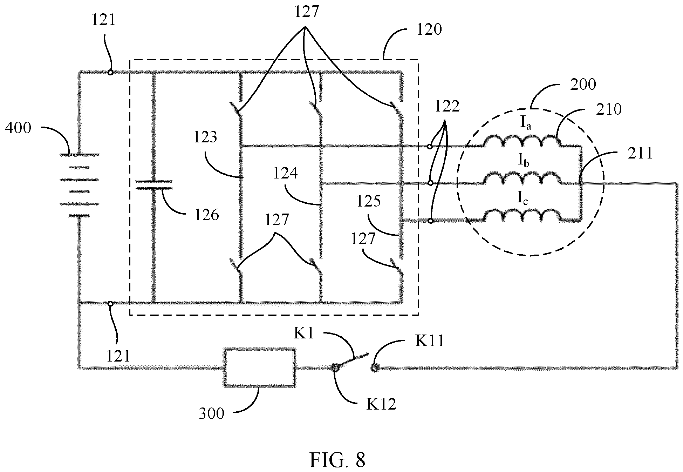

FIG. 7 is a schematic diagram of an electrical architecture of another heating apparatus according to an embodiment of this application. FIG. 8 is an three-phase inverter circuit of the heating apparatus in FIG. 7. As shown in FIG. 7 and FIG. 8, this application further provides a second implementation of the heating apparatus. Compared with the heating apparatus in Embodiment 1, the heating apparatus in Embodiment 2 is different in that the heating apparatus further includes a switch K1 disposed between a motor 200 and an electric heater 300. The switch K1 has a seventh connection end K11 and an eighth connection end K12, the seventh connection end K11 is connected to a fourth connection end 230 of a motor 200, and the eighth connection end K12 is connected to a fifth connection end 310 of the electric heater 300. The switch K1 may be a single-pole single-throw switch or a button-type or knob-type switch, or may be a switch controlled by using an electrical signal, for example, an electromagnetic switch. When the switch K1 is an electric control switch, a controller 110 is connected to the switch K1, and therefore can send a control signal to control opening and closing of the switch K1, to control connection and disconnection between the motor 200 and the electric heater 300.

Therefore, when the electric heater 300 does not need to emit heat, the switch K1 may be controlled to be open, so that a case in which an MCU 100 cannot accurately control a zero axis current $I_0$ to be zero when controlling the motor 200 to rotate or emit heat can be avoided, and control accuracy of the motor 200 can be prevented from being affected.

Further, costs of a switch are related to a value of a current in a circuit that can be controlled by the switch. Therefore, when a current in a circuit is very large, a performance requirement for a switch that controls disconnection and connection of the circuit is very high, and therefore costs of the switch are very high. When a current in a circuit is very small, a performance requirement for a switch that controls disconnection and connection of the circuit is very low, and therefore costs of the switch are very low. When the electric heater 300 is a PTC device, because a resistance value of the PTC device is usually at least 100 ohms during normal working, a zero axis current $I_0$ is usually at most 10 A when the PTC device works. Therefore, a performance requirement for the switch K1 is relatively low, and therefore costs of the switch K1 are relatively low. Therefore, costs of adding the switch K1 are far lower than costs of a control circuit that needs to accurately control a current change of the PTC device. Likewise, because a required zero axis current $I_0$ is relatively small, impact on heat emission or rotation of three-phase windings 210 in the motor 200 is also relatively small. Therefore, while controlling the motor 200, the MCU 100 can provide a zero axis current $I_0$ to control the PTC device to emit heat.

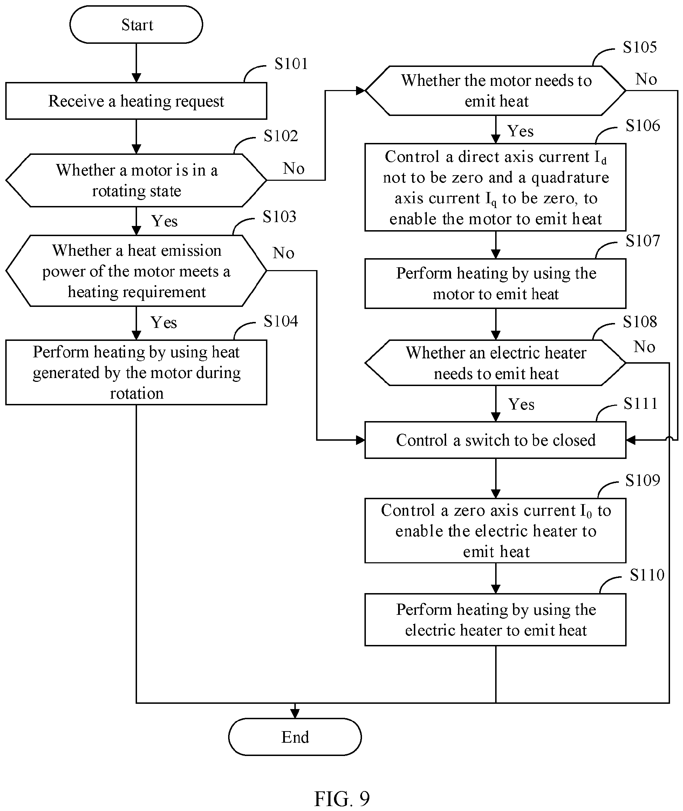

FIG. 9 is a flowchart of another control method according to an embodiment of this application. As shown in FIG. 9, based on the heating apparatus in Embodiment 2, this application further provides another control method. Compared with the control method in Embodiment 1, the control method in Embodiment 2 is different in that in the control method in Embodiment 2, after it is determined, in step S103, that the heat emission power of the motor 200 cannot meet the heating requirement, after it is determined, in step S105, that the motor 200 does not need to emit heat, or after it is determined, in step S108, that the electric heater 300 needs to emit heat, the following step is added:

S111. The controller 110 controls the switch K1 to be closed, so that the electric heater 300 is connected to a star point 211 to form a loop, and then enters step S109.

Therefore, the electric heater 300 can be controlled, when the electric heater 300 needs to emit heat, to be connected to the star point 211, so that a case in which the MCU 100 cannot accurately control the zero axis current $I_0$ to be zero when controlling the motor 200 to rotate or emit heat can be avoided, and control accuracy of the motor 200 can be further prevented from being affected because the controller 110 controls the zero axis current $I_0$ to be zero, so that control burden of the controller 110 can be reduced.

## Embodiment 3

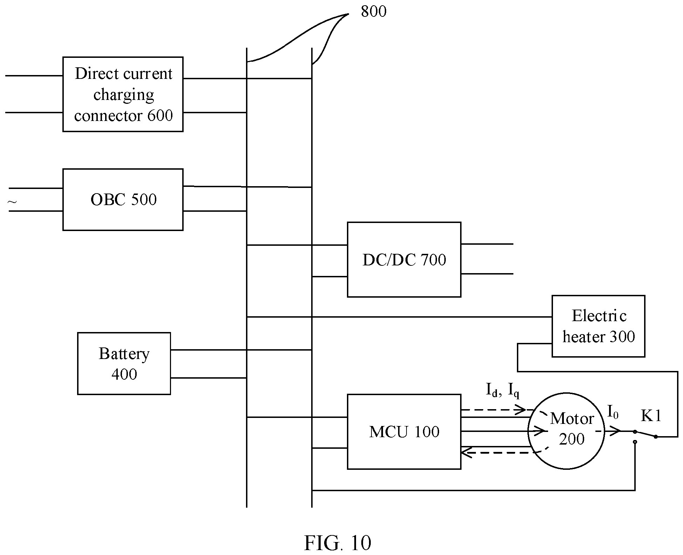

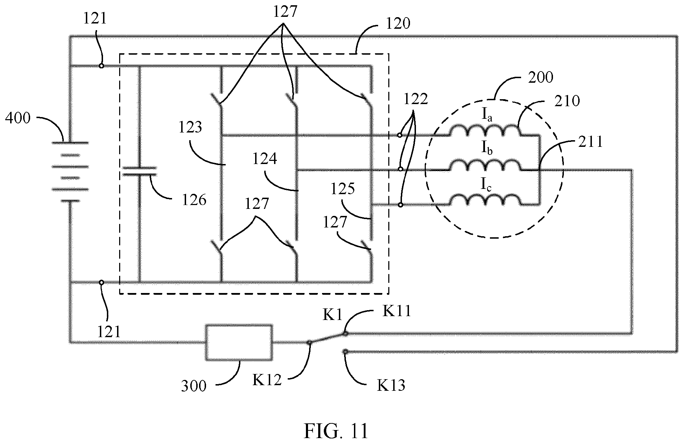

FIG. 10 is a schematic diagram of an electrical architecture of a third heating apparatus according to an embodiment of this application. FIG. 11 is an three-phase inverter circuit of the heating apparatus in FIG. 10. As shown in FIG. 10 and FIG. 11, this application further provides a third implementation of the heating apparatus. Compared with the heating apparatus in Embodiment 2, the heating apparatus in Embodiment 3 is different in that a switch K1 between a motor 200 and an electric heater 300 has a seventh connection end K11, an eighth connection end K12, and a ninth connection end K13. The seventh connection end K11 of the switch K1 is connected to a fourth connection end 230 of the motor 200, the eighth connection end K12 of the switch K1 is connected to a fifth connection end 310 of the electric heater 300, and the ninth connection end K13 of the switch K1 is connected to a bus bar 800. The switch K1 may be a single-pole double-throw switch or a button-type or knob-type switch, or may be a switch controlled by using an electrical signal, for example, an electromagnetic switch. When the switch K1 is an electric control switch, a controller 110 can send a control signal to control the switch K1 to enable the eighth connection end K12 to be connected to the seventh connection end K11 or the ninth connection end K13, so that the electric heater 300 can be controlled to be connected behind the star point 211 in series to form a loop, or the electric heater 300 can be controlled to be connected to the bus bar 800 in parallel to form a loop.

Therefore, when the controller 110 controls the switch to enable the seventh connection end K11 to be connected to the eighth connection end K12, the heating apparatus in Embodiment 3 is the same as the heating apparatuses in Embodiment 1 and Embodiment 2, and can work in the same mode. When a required heat emission power of the electric heater 300 is greater than or equal to a rated power of the electric heater 300, the controller 110 may control the switch K1 to enable the eighth connection end K12 to be connected to the ninth connection end K13, so that the electric heater 300 is disconnected from the star point 211 and is directly connected to the bus bar 800. The electric heater 300 emits heat at the rated heat emission power, so that control burden of the controller 110 can be reduced, thereby improving control flexibility of the electric heater 300.

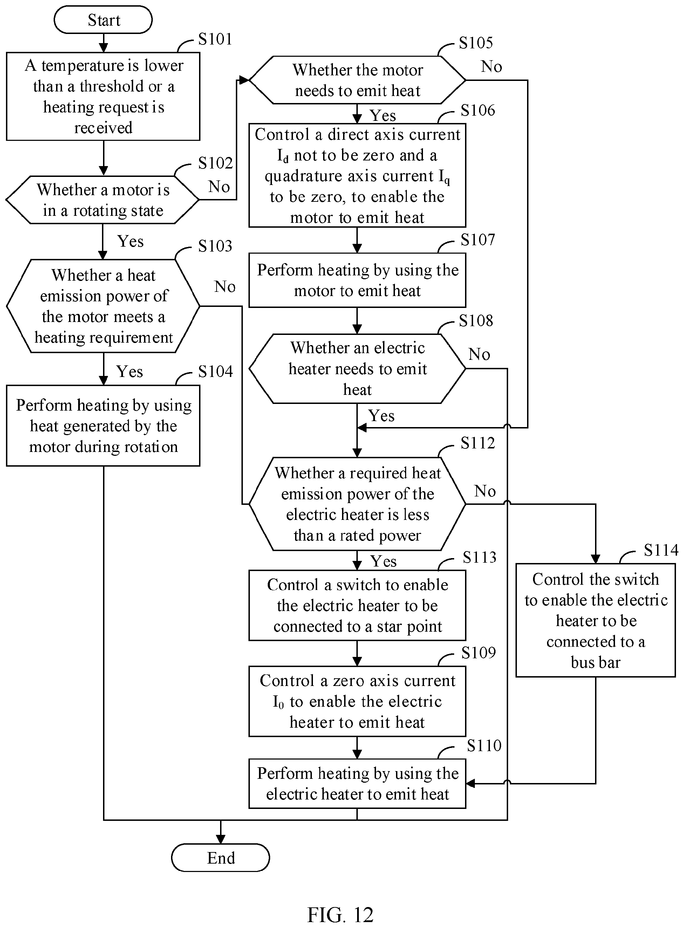

FIG. 12 is a flowchart of a third control method according to an embodiment of this application. As shown in FIG. 12, based on the heating apparatus in Embodiment 3, this application further provides a third control method. Compared with the control method in Embodiment 1, the control method in Embodiment 3 is different in that in the control method in Embodiment 3, after it is determined, in step S103, that the heat emission power of the motor 200 cannot meet the heating requirement, after it is determined, in step S105, that the motor 200 does not need to emit heat, or after it is determined, in step S108, that the electric heater 300 needs to emit heat, the following step is added:

S112. Determine whether heat emission power that the electric heater 300 needs to provide is less than rated heat emission power of the electric heater 300. When the heat emission power that the electric heater 300 needs to provide is less than the rated heat emission power of the electric heater 300, step S113 is entered. When the heat emission power that the electric heater 300 needs to provide is greater than or equal to the rated heat emission power of the electric heater 300, step S114 is entered.

S113. The controller 110 controls a switch K1 to enable the electric heater 300 to be connected to a star point 211, that is, enable the electric heater 300 to be connected behind the star point 211 in series, and then enters step S109.

S114. The controller 110 controls the switch K1 to enable the electric heater 300 to be connected to a bus bar 800, that is, enable the electric heater 300 to be connected to the bus bar 800 in parallel, so that the electric heater 300 emits heat at the rated power, and then enters step S110.

Therefore, when the heat emission power that the electric heater 300 needs to provide is greater than or equal to the rated heat emission power, the switch K1 can be controlled, by using the controller 110, to enable the electric heater 300 to be connected to the bus bar 800 in parallel, without a need to control a zero axis current $I_0$ by using the controller 110, to control the electric heater 300 to emit heat. Therefore, control burden of the controller 110 can be reduced.

**Embodiment 4**

Based on the heating apparatus in the embodiments of this application, this application further provides a cooling loop connection structure, to transport, to an area that needs to be heated, such as a battery 400 or a cabin 900, heat emitted by a motor 200 and an electric heater 300.

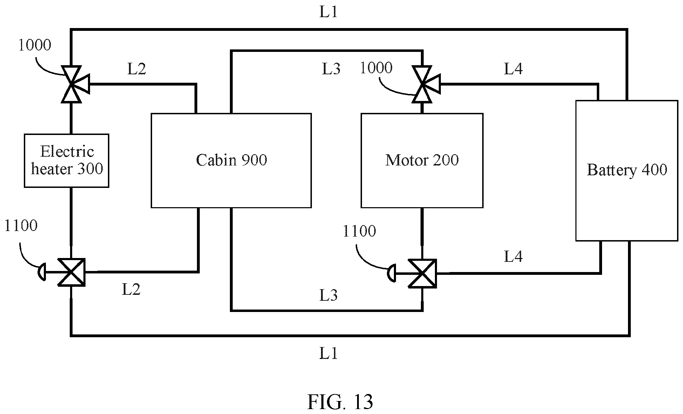

FIG. 13 is a schematic diagram of a cooling loop connection structure according to an embodiment of this application. As shown in FIG. 13, an example in which a cabin 900 and a battery 400 of a vehicle are heated by using the heating apparatus in this application is used. The cooling loop connection structure in this embodiment of this application includes a first circulation loop L1 formed between an electric heater 300 and the battery 400, a second circulation loop L2 formed between the electric heater 300 and the cabin 900, a third circulation loop L3 formed between a motor 200 and the cabin 900, and a fourth circulation loop L4 formed between the motor 200 and the battery 400.

Specifically, as shown in FIG. 13, the cooling loop connection structure includes the electric heater 300, the cabin 900, the motor 200, the battery 400, two three-way connectors 1000, and two three-way valves 1100. The electric heater 300 and the motor 200 each have one output port and one input port. The cabin 900 and the battery 400 each have two output ports and two input ports. The three-way connector 1000 has three interfaces connected to each other. The three-way valve 1100 has three interfaces and can control connection and disconnection between the three interfaces.

Three interfaces of one three-way connector 1000 are respectively connected to an input port of the electric heater 300, one output port of the cabin 900, and one output port of the battery 400 by using pipes, and three interfaces of the other three-way connector 1000 are respectively connected to an input port of the motor 200, the other output port of the cabin 900, and the other output port of the battery 400 by using pipes. Three interfaces of one three-way valve 1100 are respectively connected to an output port of the electric heater 300, one input port of the cabin 900, and one input port of the battery 400 by using pipes, and three interfaces of the other three-way valve 1100 are respectively connected to an output port of the motor 200, the other input port of the cabin 900, and the other input port of the battery 400 by using pipes.

The first circulation loop L1, the second circulation loop L2, the third circulation loop L3, and the fourth circulation loop L4 are filled with coolant, and the coolant may be water, oil, or another medium. The coolant circulates in the first circulation loop L1, the second circulation loop L2, the third circulation loop L3, and the fourth circulation loop L4. Therefore, heat of the electric heater 300 and the motor 200 can be separately transported to the cabin 900 and the battery 400, so that temperatures of the cabin 900 and the battery 400 can be improved. One three-way valve 1100 can control connection and disconnection between three interfaces, to control connection and disconnection of the first circulation loop L1 and the second circulation loop L2. The other three-way valve 1100 can control connection and disconnection between three interfaces, to control connection and disconnection of the third circulation loop L3 and the fourth circulation loop L4.

Therefore, when the battery 400 needs to be heated, the first circulation loop L1 and/or the fourth circulation loop L4 can be connected, so that the battery 400 can be heated by using heat emitted by the electric heater 300 and/or the motor 200. When the cabin 900 needs to be heated, the second circulation loop L2 and/or the third circulation loop L3 can be connected, so that the cabin 900 can be heated by using heat emitted by the electric heater 300 and/or the motor 200. Therefore, circulation of the coolant can be flexibly controlled based on heating requirements of the battery 400 and the cabin 900, to distribute heat emitted by the motor 200 and the electric heater 300.

**Embodiment 5**

Based on the heating apparatus in the embodiments of this application, this application further provides another cooling loop connection structure, to transport, to an area that needs to be heated, heat emitted by a motor 200 and an electric heater 300.

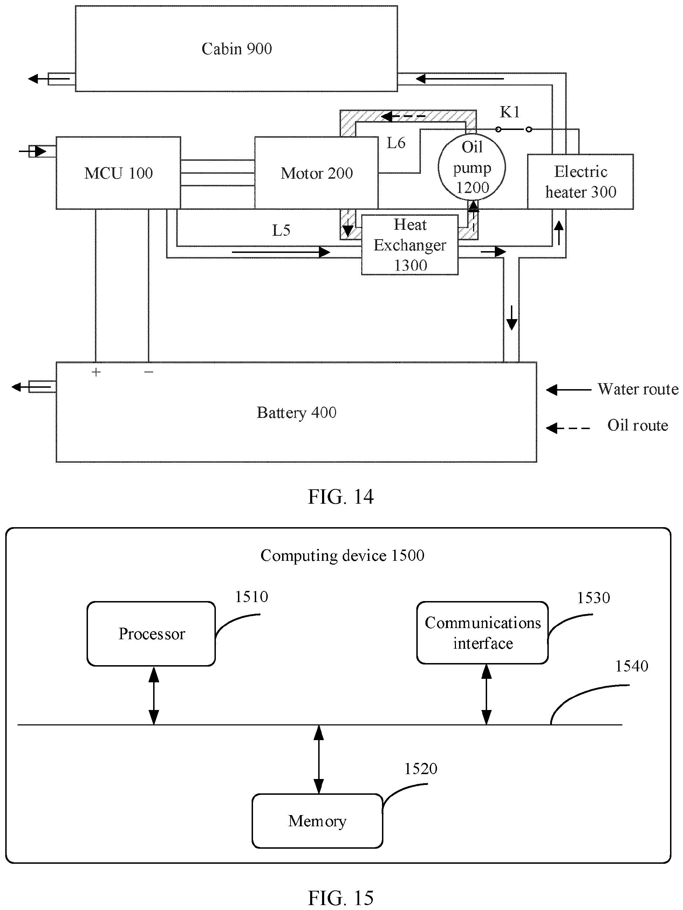

FIG. 14 is a schematic diagram of another cooling loop connection structure according to an embodiment of this application. As shown in FIG. 14, the another cooling loop connection structure in this embodiment of this application includes a fifth circulation loop L5 formed between a cabin 900, an MCU 100, a battery 400, and an electric heater 300, and a sixth circulation loop L6 formed between a motor 200 and an oil pump 1200. The fifth circulation loop L5 and the sixth circulation loop L6 exchange heat through a heat exchanger 1300.

Specifically, as shown in FIG. 14, the cabin 900, the MCU 100, the battery 400, the electric heater 300, the motor 200, and the oil pump 1200 each have one input port and one output port, and the heat exchanger 1300 has two input ports and two output ports. An input port of the MCU 100 is connected to output ports of the cabin 900 and the battery 400 by using pipes, an output port of the MCU 100 is connected to one input port of the heat exchanger by using a pipe, one output port of the heat exchanger is connected to input ports of the electric heater 300 and the battery 400 by using pipes, and an output port of the electric heater 300 is connected to an input port of the cabin 900 by using a pipe, thereby forming the fifth circulation loop L5. An output port of the motor 200 is connected to the other input port of the heat exchanger 1300 by using a pipe, the other output port of the heat exchanger 1300 is connected to an input port of the oil pump 1200, and an output port of the oil pump 1200 is connected to an input port of the motor 200, thereby forming the sixth circulation loop L6.

The fifth circulation loop L5 and the sixth circulation loop L6 are filled with coolant, coolant in the fifth circulation loop L5 is water, and coolant in the sixth circulation loop L6 is oil. The water in the fifth circulation loop L5 and the oil in the sixth circulation loop L6 are located in two mutually isolated spaces in the heat exchanger 1300. The oil flows in the sixth circulation loop L6, so that heat emitted by the motor 200 can be transferred to the water in the fifth circulation loop L5 through the heat exchanger 1300. Coolant flows in the fifth circulation loop L5, so that heat emitted by the MCU 100, the electric heater 300, and the motor 200 can be transferred to the battery 400 and the cabin 900. Therefore, the fifth circulation loop L5 and the sixth circulation loop L6 can circularly transfer heat independently of each other, and heat exchange between the fifth circulation loop L5 and the sixth circulation loop L6 is implemented by using the heat exchanger 1300.

Therefore, the battery 400 and/or the cabin 900 can be heated by using heat generated by the electric heater 300 and/or the motor 200, so that heat of the motor 200 and the electric heater 300 can be flexibly distributed. In addition, heat generated by the MCU 100 during working can be utilized, thereby improving a heat emission power and energy utilization.

It should be noted that the cabin 900 and the battery 400 are both merely objects that need to be heated, and can be interchanged or replaced with other objects that need to be heated. The cooling loop connection structures in Embodiment 4 and Embodiment 5 are merely used to describe the implementations of this application, and a use environment of the heating apparatus in this application is not limited to the cooling loop connection structures in Embodiment 4 and Embodiment 5.

**Embodiment 6**

FIG. 15 is a schematic diagram of a structure of a computing device 1500 according to an embodiment of this application. The computing device 1500 includes a processor 1510, a memory 1520, a communications interface 1530, and a bus 1540.

It should be understood that the communications interface 1530 in the computing device 1500 shown in FIG. 15 may be configured to communicate with another device.

The processor 1510 may be connected to the memory 1520. The memory 1520 may be configured to store program code and data. Therefore, the memory 1520 may be a storage unit in the processor 1510, an external storage unit independent of the processor 1510, or a component including the storage unit in the processor 1510 and the external storage unit independent of the processor 1510.

Optionally, the computing device 1500 may further include the bus 1540. The memory 1520 and the communications interface 1530 may be connected to the processor 1510 by using the bus 1540. The bus 1540 may be a peripheral component interconnect (PCI) bus, an extended industry standard architecture (EISA) bus, or the like. The bus 1540 may be classified into an address bus, a data bus, a control bus, and the like. For ease of representation, only one line is used to represent the bus in FIG. 15, but this does not mean that there is only one bus or only one type of bus.

It should be understood that in this embodiment of this application, the processor 1510 may be a central processing unit (CPU). The processor may be alternatively a general-purpose processor, a digital signal processor (DSP), an application-specific integrated circuit (ASIC), a field programmable gate array (FPGA) or another programmable logical device, a discrete gate or transistor logic device, or a discrete hardware component. The general-purpose processor may be a microprocessor, or the processor may be any conventional processor, or the like. Alternatively, the processor 1510 uses one or more integrated circuits to execute a related program, to implement the technical solutions provided in the embodiments of this application.

The memory 1520 may include a read-only memory and a random access memory, and provide instructions and data to the processor 1510. A part of the processor 1510 may further include a non-volatile random access memory. For example, the processor 1510 may further store information of a device type.

When the computing device 1500 runs, the processor 1510 executes computer executable instructions in the memory 1520 to perform the operation steps of the foregoing method.

It should be understood that the computing device 1500 according to this embodiment of this application may correspond to a corresponding execution body of the method according to the embodiments of this application, and the foregoing and other operations and/or functions of modules in the computing device 1500 are separately intended to implement corresponding procedures of the methods in the embodiments. For simplicity, details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by the hardware or the software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the described systems, apparatuses, and units, refer to a corresponding process in the foregoing method embodiment.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of the embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, some of the technical solutions may be implemented in the form of a software product. The computer software product is stored in a storage medium and includes several instructions for instructing a computing device (which may be a personal computer, a server, a network device, or the like) to perform all or some of the steps of the methods described in the embodiments of this application. The storage medium includes: any medium that can store program code, such as a USB flash drive, a removable hard disk, a read-only memory (ROM), a random access memory (RAM), a magnetic disk, or an optical disc.

An embodiment of this application further provides a computer-readable storage medium. The computer-readable storage medium stores a computer program, and when being executed by a processor, the program is used to perform a control method. The method includes at least one of the solutions described in the foregoing embodiments.

The computer storage medium according to this embodiment of this application may be any combination of one or more computer-readable media. The computer-readable medium may be a computer-readable signal medium or a computer-readable storage medium. The computer-readable storage medium may be but is not limited to an electric, magnetic, optical, electromagnetic, infrared, or semiconductor system, apparatus, or device, or any combination thereof. More specific examples (a non-exhaustive list) of the computer-readable storage medium include an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In this document, the computer-readable storage medium may be any tangible medium including or storing a program that may be used by an instruction execution system, apparatus, or device, or be used in combination with an instruction execution system, apparatus, or device.

A computer-readable signal medium may include a data signal propagated in a baseband or propagated as part of a carrier, where the data signal carries computer-readable program code. Such a propagated data signal may take a variety of forms, including but not limited to an electromagnetic signal, an optical signal, or any suitable combination thereof. The computer-readable signal medium may alternatively be any computer-readable medium other than the computer-readable storage medium. The computer-readable medium may send, propagate, or transmit the program used by the instruction execution system, apparatus, or device, or used in combination with the instruction execution system, apparatus, or device.

The program code included in the computer-readable medium may be transmitted by using any suitable medium, including but not limited to Wi-Fi, a wire, an optical cable, RF, and the like, or any suitable combination thereof.

Computer program code for performing the operations in this application may be written in one or more programming languages, or a combination thereof. The programming languages include an object-oriented programming language, such as Java, Smalltalk, and C++, and also include a conventional procedural programming language, such as a "C" language or a similar programming language. The program code may be executed entirely on a user computer, or some may be executed on a user computer as a separate software package, or some may be executed on a user computer while some is executed on a remote computer, or the code may be entirely executed on a remote computer or a server. When a remote computer is involved, the remote computer may be connected to a user computer by using any type of network, including a local area network (LAN) or a wide area network (WAN), or may be connected to an external computer (for example, connected by using an Internet service provider through the Internet).

It should be noted that the foregoing are merely example embodiments of this application and used technical principles. A person skilled in the art can understand that this application is not limited to the specific embodiments described herein and a person skilled in the art can make various apparent changes, re-adjustments, and substitutions without departing from the protection scope of this application.

**Claims**

1. A heating apparatus, comprising:

   a motor control unit (100), having an inverter (120) and a controller (100) that are connected to each other;
   an electric heater (300); and
   a motor (200), having three-phase windings (210), wherein ends (122) of the three-phase windings are connected to the inverter, the other ends of the three-phase windings are connected to a connection point, point (211), **characterised in that** the connection point is connected to the electric heater.

2. The heating apparatus according to claim 1, further comprising a switch (K1) disposed between the motor and the electric heater.

3. The heating apparatus according to claim 2, wherein the switch is configured to switch the electric heater and the motor to form a serial connection or parallel connection loop.

4. The heating apparatus according to claim 2 or 3, wherein the switch is connected to the controller, and the controller controls opening and closing of the switch.

5. A control method for a heating apparatus, wherein the heating apparatus is the heating apparatus according to any one of claims 1 to 4, and the control method comprises:

   in a first case, controlling currents in the three-phase windings, so that at least one of the motor and the electric heater emits heat, wherein
   the first case comprises at least one of a case in which a temperature of a heated object is lower than a threshold and a case in which the controller receives a heating request signal.

6. The control method for a heating apparatus according to claim 5, further comprising:

   when the motor is in a rotating state, and a heat emission power of the motor is less than the heating power that needs to be provided, controlling the electric heater to emit heat.

7. The control method for a heating apparatus according to claim 5, further comprising:

when the
heat emission power of the motor is greater than or equal to the heating power that needs to be provided, controlling the connection point to be disconnected from the electric heater.

8. The control method for a heating apparatus according to claim 5 or 6, further comprising:

when the heat emission power of the motor is less than the heating power that needs to be provided, controlling the connection point to be connected to the electric heater.

9. The control method for a heating apparatus according to claim 5 or 6, further comprising:

when the
required heating power of the electric heater is less than a rated heat emission power of the electric heater, controlling the electric heater to be connected to the connection point.

10. The control method for a heating apparatus according to claim 5 or 6, further comprising: when the required heating power of the electric heater is greater than or equal to the rated heat emission power of the electric heater, controlling the electric heater to form a parallel connection loop with the motor.

11. A controller, configured to control a motor and an electric heater, wherein

the controller is connected to an inverter, the motor has three-phase windings, ends of the three-phase windings are connected to the inverter, the other ends of the three-phase windings are connected to a connection point, and the connection point is connected to the electric heater; and
in a first case, the controller controls currents in the three-phase windings, so that at least one of the motor and the electric heater emits heat, wherein
the first case comprises at least one of a case in which a temperature of a heated object is lower than a threshold and a case in which the controller receives a heating request signal.

12. The controller according to claim 11, wherein
when the motor is in a rotating state, and the heat emission power of the motor is less than the heating power that needs to be provided, the controller controls the electric heater to emit heat.

13. The controller according to claim 11, wherein
when the heat emission power of the motor is greater than or equal to the heating power that needs to be provided, the controller controls the connection point to be disconnected from the electric heater.

14. The controller according to claim 11 or 12, wherein
when the heat emission power of the motor is less than the heating power that needs to be provided, the controller controls the connection point to be connected to the electric heater.

15. The controller according to claim 11 or 12, wherein
when the required heating power of the electric heater is less than the rated heat emission power of the electric heater, the controller controls the electric heater to be connected to the connection point.

**Patentansprüche**

1. Wärmevorrichtung, die umfasst:
eine Motorsteuereinheit (100), die einen Wechselrichter (120) und eine Steuerung (100), die miteinander verbunden sind, aufweist; eine elektrische Wärmeeinrichtung (300); und einen Motor (200), der Dreiphasenwicklungen (210) aufweist, wobei Enden (122) der Dreiphasenwicklungen mit dem Wechselrichter verbunden sind, wobei die anderen Enden der Dreiphasenwicklungen mit einem Verbindungspunkt (211) verbunden sind, **dadurch gekennzeichnet, dass** der Verbindungspunkt mit der elektrischen Wärmeeinrichtung verbunden ist.

2. Wärmevorrichtung nach Anspruch 1, die ferner einen Schalter (K1), der zwischen dem Motor und der elektrischen Wärmeeinrichtung angeordnet ist, umfasst.

3. Wärmevorrichtung nach Anspruch 2, wobei der Schalter konfiguriert ist, um die elektrische Wärmeeinrichtung und den Motor zu schalten, um eine Serienverbindungs- oder Parallelverbindungsschleife auszubilden.

4. Wärmevorrichtung nach Anspruch 2 oder 3, wobei der Schalter mit der Steuerung verbunden ist und die Steuerung ein Öffnen und ein Schließen des Schalters steuert.

5. Steuerungsverfahren für eine Wärmevorrichtung, wobei die Wärmevorrichtung die Wärmevorrichtung nach einem der Ansprüche 1 bis 4 ist und das Steuerungsverfahren umfasst:

in einem ersten Fall, Steuern von Strömen in den Dreiphasenwicklungen, so dass mindestens eines von dem Motor und der elektrischen Wärmeeinrichtung Wärme abgibt, wobei
der erste Fall mindestens eines von einem Fall, in dem eine Temperatur eines erwärmten Objekts unter einem Schwellenwert liegt, und einem Fall, in dem die Steuerung ein Wärmeanforderungssignal empfängt, umfasst.

6. Steuerungsverfahren für eine Wärmevorrichtung nach Anspruch 5, das ferner umfasst:
wenn sich der Motor in einem Drehzustand befindet und eine Wärmeabgabeleistung des Motors geringer als die Wärmeleistung, die bereitgestellt werden muss, ist, Steuern der elektrischen Wärmeeinrichtung, um Wärme abzugeben.

7. Steuerungsverfahren für eine Wärmevorrichtung nach Anspruch 5, das ferner umfasst:
wenn die Wärmeabgabeleistung des Motors größer als oder gleich der Wärmeleistung, die bereitgestellt werden muss, ist, Steuern des Verbindungspunkts, um von der elektrischen Wärmeeinrichtung getrennt zu werden.

8. Steuerungsverfahren für eine Wärmevorrichtung nach Anspruch 5 oder 6, das ferner umfasst:
wenn die Wärmeabgabeleistung des Motors geringer als die Wärmeleistung, die bereitgestellt werden muss, ist, Steuern des Verbindungspunkts, um mit der elektrischen Wärmeeinrichtung verbunden zu werden.

9. Steuerungsverfahren für eine Wärmevorrichtung nach Anspruch 5 oder 6, das ferner umfasst:
wenn die erforderliche Wärmeleistung der elektrischen Wärmeeinrichtung geringer als eine Nennwärmeabgabeleistung der elektrischen Wärmeeinrichtung ist, Steuern der elektrischen Wärmeeinrichtung, um mit dem Verbindungspunkt verbunden zu werden.

10. Steuerungsverfahren für eine Wärmevorrichtung nach Anspruch 5 oder 6, das ferner umfasst: wenn die erforderliche Wärmeleistung der elektrischen Wärmeeinrichtung größer als oder gleich der Nennwärmeabgabeleistung der elektrischen Wärmeeinrichtung ist, Steuern der elektrischen Wärmeeinrichtung, um eine Parallelverbindungsschleife mit dem Motor auszubilden.

11. Steuerung, die konfiguriert ist, um einen Motor und eine elektrische Wärmeeinrichtung zu steuern, wobei

die Steuerung mit einem Wechselrichter verbunden ist, der Motor Dreiphasenwicklungen aufweist, Enden der Dreiphasenwicklungen mit dem Wechselrichter verbunden sind, die anderen Enden der Dreiphasenwicklungen mit einem Verbindungspunkt verbunden sind, und der Verbindungspunkt ist mit der elektrischen Wärmeeinrichtung verbunden ist; und
in einem ersten Fall, die Steuerung Ströme in den Dreiphasenwicklungen so steuert, dass mindestens eines von dem Motor und der elektrischen Wärmeeinrichtung Wärme abgibt, wobei
der erste Fall mindestens eines von einem Fall, in dem eine Temperatur eines erwärmten Objekts unter einem Schwellenwert liegt, und einem Fall, in dem die Steuerung ein Wärmeanforderungssignal empfängt, umfasst.

12. Steuerung nach Anspruch 11, wobei
wenn sich der Motor in einem Drehzustand befindet und die Wärmeabgabeleistung des Motors geringer als die Wärmeleistung, die bereitgestellt werden muss, ist, die Steuerung die elektrische Wärmeeinrichtung steuert, um Wärme abzugeben.

13. Steuerung nach Anspruch 11, wobei
wenn die Wärmeabgabeleistung des Motors größer als oder gleich der Wärmeleistung, die bereitgestellt werden muss, ist, die Steuerung den Verbindungspunkt steuert, um von der elektrischen Wärmeeinrichtung getrennt zu werden.

**14.** Steuerung nach Anspruch 11 oder 12, wobei
wenn die Wärmeabgabeleistung des Motors geringer als die Wärmeleistung, die bereitgestellt werden muss, ist, die Steuerung den Verbindungspunkt steuert, um mit der elektrischen Wärmeeinrichtung verbunden zu werden.

**15.** Steuerung nach Anspruch 11 oder 12, wobei
wenn die erforderliche Wärmeleistung der elektrischen Wärmeeinrichtung geringer als die Nennwärmeabgabeleistung der elektrischen Wärmeeinrichtung ist, die Steuerung die elektrische Wärmeeinrichtung steuert, um mit dem Verbindungspunkt verbunden zu werden.

**Revendications**

**1.** Appareil de chauffage, comprenant :
une unité de commande de moteur (100), ayant un onduleur (120) et un dispositif de commande (100) qui sont connectés l'un à l'autre ; un dispositif de chauffage électrique (300) ; et un moteur (200), ayant des enroulements triphasés (210), dans lequel les extrémités (122) des enroulements triphasés sont connectées à l'onduleur, les autres extrémités des enroulements triphasés sont connectées à un point de connexion, point (211), **caractérisé en ce que** le point de connexion est connecté au dispositif de chauffage électrique.

**2.** Appareil de chauffage selon la revendication 1, comprenant en outre un commutateur (K1) disposé entre le moteur et le dispositif de chauffage électrique.

**3.** Appareil de chauffage selon la revendication 2, dans lequel le commutateur est configuré pour commuter le dispositif de chauffage électrique et le moteur afin de former une connexion en série ou une boucle de connexion parallèle.

**4.** Appareil de chauffage selon la revendication 2 ou 3, dans lequel le commutateur est connecté au dispositif de commande, et le dispositif de commande commande l'ouverture et la fermeture du commutateur.

**5.** Procédé de commande destiné à un appareil de chauffage, dans lequel l'appareil de chauffage est l'appareil de chauffage selon l'une quelconque des revendications 1 à 4, et le procédé de commande comprend :

dans un premier cas, la commande des courants dans les enroulements triphasés, de sorte qu'au moins l'un parmi le moteur et le dispositif de chauffage électrique émet de la chaleur, dans lequel
le premier cas comprend au moins l'un parmi un cas dans lequel une température d'un objet chauffé est inférieure à un seuil et un cas dans lequel le dispositif de commande reçoit un signal de demande de chauffage.

**6.** Procédé de commande destiné à un appareil de chauffage selon la revendication 5, comprenant en outre :
lorsque le moteur est dans un état rotatif et qu'une puissance d'émission de chaleur du moteur est inférieure à la puissance de chauffage à fournir, la commande du dispositif de chauffage électrique pour émettre de la chaleur.

**7.** Procédé de commande destiné à un appareil de chauffage selon la revendication 5, comprenant en outre :
lorsque la puissance d'émission de chaleur du moteur est supérieure ou égale à la puissance de chauffage à fournir, la commande du point de connexion à déconnecter du dispositif de chauffage électrique.

**8.** Procédé de commande destiné à un appareil de chauffage selon la revendication 5 ou 6, comprenant en outre :
lorsque la puissance d'émission de chaleur du moteur est inférieure à la puissance de chauffage à fournir, la commande du point de connexion à connecter au dispositif de chauffage électrique.

**9.** Procédé de commande destiné à un appareil de chauffage selon la revendication 5 ou 6, comprenant en outre :
lorsque la puissance de chauffage requise du dispositif de chauffage électrique est inférieure à une puissance d'émission de chaleur nominale du dispositif de chauffage électrique, la commande du dispositif de chauffage électrique à connecter au point de connexion.

**10.** Procédé de commande destiné à un appareil de chauffage selon la revendication 5 ou 6, comprenant en outre :
lorsque la puissance de chauffage requise du dispositif de chauffage électrique est supérieure ou égale à la puissance d'émission de chaleur nominale du dispositif de chauffage électrique, la commande du dispositif de chauffage électrique pour former une boucle de connexion parallèle avec le moteur.

**11.** Dispositif de commande, configuré pour commander un moteur et un dispositif de chauffage électrique, dans lequel

le dispositif de commande est connecté à un onduleur, le moteur a des enroulements triphasés, les extrémités des enroulements triphasés sont connectées à l'onduleur, les autres extrémités des enroulements triphasés sont connectées à un point de connexion et le point de connexion est connecté au dispositif de chauffage électrique ; et
dans un premier cas, le dispositif de commande commande les courants dans les enroulements triphasés, de sorte qu'au moins l'un parmi le moteur et le dispositif de chauffage électrique émet de la chaleur, dans lequel le premier cas comprend au moins l'un parmi un cas dans lequel une température d'un objet chauffé est inférieure à un seuil et un cas dans lequel le dispositif de commande reçoit un signal de demande de chauffage.

**12.** Dispositif de commande selon la revendication 11, dans lequel
lorsque le moteur est dans un état rotatif et que la puissance d'émission de chaleur du moteur est inférieure à la puissance de chauffage à fournir, le dispositif de commande commande le dispositif de chauffage électrique pour émettre de la chaleur.

**13.** Dispositif de commande selon la revendication 11, dans lequel
lorsque la puissance d'émission de chaleur du moteur est supérieure ou égale à la puissance de chauffage à fournir, le dispositif de commande commande le point de connexion à déconnecter du dispositif de chauffage électrique.

**14.** Dispositif de commande selon la revendication 11 ou 12, dans lequel
lorsque la puissance d'émission de chaleur du moteur est inférieure à la puissance de chauffage à fournir, le dispositif de commande commande le point de connexion à connecter au dispositif de chauffage électrique.

**15.** Dispositif de commande selon la revendication 11 ou 12, dans lequel
lorsque la puissance de chauffage requise du dispositif de chauffage électrique est inférieure à la puissance d'émission de chaleur nominale du dispositif de chauffage électrique, le dispositif de commande commande le dispositif de chauffage électrique à connecter au point de connexion.

FIG. 1

Direct current charging connector 600

OBC 500

DC/DC 700

900

Battery 400

Electric heater 300

MCU 100

Motor

200

FIG. 2

FIG. 3

FIG. 4

FIG. 5

FIG. 6

FIG. 7

FIG. 8

```
                          ┌─────────────┐
                          │    Start    │
                          └──────┬──────┘
                                 │
                                 ▼                                    ┌─── S105
                   ┌──── S101                          ╱╲ Whether the motor needs to ╲     No
      ┌──────────────────────────┐                   ⟨   emit heat                    ⟩──────┐
      │  Receive a heating request│                    ╲                              ╱       │
      └─────────────┬────────────┘                      ╲────────────────────────────╱        │
                    │                                           │ Yes    ┌─── S106              │
                    ▼          ┌─── S102                         ▼                              │
                   ╱╲ Whether a motor is in a ╲    No   ┌──────────────────────────────┐       │
                  ⟨   rotating state            ⟩──────▶│ Control a direct axis current Id│      │
                   ╲                          ╱         │ not to be zero and a quadrature│      │
                    ╲────────────────────────╱          │ axis current Iq to be zero, to │      │
                          │ Yes    ┌─── S103             │ enable the motor to emit heat  │      │
                          ▼                              └───────────────┬──────────────┘      │
            ╱╲ Whether a heat emission ╲    No                          │   ┌─── S107           │
           ⟨   power of the motor meets a ⟩────────┐                     ▼                       │
            ╲  heating requirement       ╱         │           ┌──────────────────────┐        │
             ╲──────────────────────────╱          │           │ Perform heating by using│      │
                    │ Yes    ┌─── S104              │           │ the motor to emit heat │      │
                    ▼                               │           └───────────┬──────────┘        │
      ┌──────────────────────────┐                  │                      │   ┌─── S108         │
      │ Perform heating by using heat│              │             ╱╲ Whether an electric heater ╲  No
      │ generated by the motor during│              │            ⟨   needs to emit heat          ⟩──┤
      │ rotation                  │                 │             ╲                              ╱   │
      └─────────────┬────────────┘                  │              ╲────────────────────────────╱   │
                    │                                │                    │ Yes   ┌─── S111            │
                    │                                │                    ▼                            │
                    │                                └──────────▶┌──────────────────────┐◀────────────┘
                    │                                            │ Control a switch to be closed│
                    │                                            └───────────┬──────────┘
                    │                                                        │   ┌─── S109
                    │                                                        ▼
                    │                                            ┌──────────────────────┐
                    │                                            │ Control a zero axis current I0 to│
                    │                                            │ enable the electric heater to│
                    │                                            │ emit heat             │
                    │                                            └───────────┬──────────┘
                    │                                                        │   ┌─── S110
                    │                                                        ▼
                    │                                            ┌──────────────────────┐
                    │                                            │ Perform heating by using the│
                    │                                            │ electric heater to emit heat│
                    │                                            └───────────┬──────────┘
                    │                                                        │
                    └────────────────────┐         ┌─────────────────────────┘
                                         ▼         ▼
                                    ┌─────────────┐
                                    │     End     │
                                    └─────────────┘
```

FIG. 9

800

Direct current
charging
connector 600

OBC 500

~

DC/DC 700

Electric
heater 300

Battery
400

MCU 100

$I_d, I_q$

Motor
200

$I_0$

K1

FIG. 10

FIG. 11

Start

S101

A temperature is lower
than a threshold or a
heating request is
received

S102

Whether a motor is
in a rotating state — No

Yes — S103

Whether a heat
emission power of
the motor meets a
heating requirement — No

Yes — S104

Perform heating by using
heat generated by the
motor during rotation

S105

Whether the motor
needs to emit heat — No

Yes — S106

Control a direct axis current
$I_d$ not to be zero and a
quadrature axis current $I_q$
to be zero, to enable the
motor to emit heat

S107

Perform heating by using the
motor to emit heat

S108

Whether an electric
heater needs to emit
heat — No

Yes

S112

Whether a required heat
emission power of the
electric heater is less
than a rated power — No

Yes — S113

Control a switch to enable
the electric heater to be
connected to a star point

S109

Control a zero axis current
$I_0$ to enable the electric
heater to emit heat

S110

Perform heating by using the
electric heater to emit heat

S114

Control the switch
to enable the electric
heater to be
connected to a
bus bar

End

FIG. 12

L1

1000

L2

L3 1000

L4

Electric
heater 300

Cabin 900

Motor 200

Battery 400

1100

1100

L4

L2

L3

L1

FIG. 13

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020125684 A1